Europäisches Patentamt

European Patent Office

Office européen des brevets

(11) Publication number: 0 298 715
A2

# (12) EUROPEAN PATENT APPLICATION

(21) Application number: 88306150.9

(22) Date of filing: 06.07.88

(51) Int. Cl.⁴: B29C 61/00 , B29C 61/04 , B29C 61/02 , B29C 61/10

(30) Priority: 07.07.87 GB 8715936

(43) Date of publication of application:
11.01.89 Bulletin 89/02

(84) Designated Contracting States:
AT BE CH DE ES FR GB IT LI NL SE

(71) Applicant: N.V. RAYCHEM S.A.
Diestsesteenweg 692
B-3200 Kessel-lo(BE)

(72) Inventor: Dierickx, Etienne Louis
Oude Dendermondsesteenweg 109
B-9300 Aalst(BE)
Inventor: Brusselmans, Jacques Hubert
François
Rue Bourgemestre Dandoy 15
B-5950 Orp-Jauche(BE)
Inventor: Winter, Josef
Bergweg 2
D-8069 Rohrbach/I lm(DE)
Inventor: Wagner, René
Eichendorffstrasse 30
D-8202 Aibling(DE)

(74) Representative: Benson, John Everett et al
Raychem Limited Intellectual Property Law
Department Swan House 37-39, High Holborn
London WC1(GB)

(54) Sealing device.

(57) A wrap-around duct seal having an internal spring that can be tensioned and then released causing a portion of the duct seal to seal to an inner surface of the duct. Another portion of the duct seal may be heat-shrinkable for sealing to a cable running through the duct.

Fig.2.

Xerox Copy Centre

## SEALING DEVICE

The present invention relates to environmental sealing of substrates such as ducts or supply lines for example pipes or cables.

Ducts and supply lines are often used in environments that are prone to contaminants such as moisture, dust, insects and gasses. Some form of seal therefore has to be provided either around the substrate (for example in the case of a supply line) or between two substrates (for example in the case of a duct seal between the duct and a supply line it carries).

Various techniques have been used in the past for forming such seals. The simplest perhaps is a tape wrap which has the advantage that a single product could be used over virtually any size or shape of subsrate, but the disadvantage of poor performance. Sealing materials such as adhesives or mastics may be used alone or with tapes, but again performance is poor.

In recent years dimensionally-recoverable articles have been used for sealing supply lines and as duct seals. In general, a dimensionally-recoverable article is an article the dimensional configuration of which may be made substantially to change when subjected to a suitable treatment, for example heating. Usually these articles recover towards an original shape from which they have previously been deformed but the term also includes an article which adopts a new configuration even if it has not previously been deformed.

In their most common form such articles comprise a heat-shrinkable sleeve made from a polymeric material exhibiting the property of elastic or plastic memory as described, for example, in US Patents 2027962, 3086242 and 3597372. In the production of heat-recoverable articles, the polymeric material may be cross-linked at any stage in the production of the article that will enhance the desired dimenisonal recoverability.

An advantage of these articles is that they are strong, impermeable, water resistant and well able to resist such agencies as the small mechanical stresses caused by temperature variation, earth movements and repair work. They can be easily installed in their recoverable configuration and then caused to shrink (or otherwise recover) into sealing engagement with the substrate that they are to protect. In this way, ease of installation can be combined with excellent performance. A single size of product may be used with a variety of sizes of substrate, and close tolerances in manufacture may be avoided.

A difficulty, however, remains in some circumstances. The very fact that these articles recover on heating means that in general heat must be applied when the article is in approximately the desired position with respect to the substrate. This may be a problem where the substrate or some article nearby is a heat sink, where it physically prevents or hinders proper positioning of a torch or other heating means, where it is hazardous for example a gas pipe, or where it may be damaged by excessive heat.

An article is disclosed in EP-A-0179659 (Raychem) which either does not need to be heated or which can be heated away from the desired installed position, but which still benefits from the ease of installation and lack of need for close tolerances usually associated with heat-shrinkable products. That article may be a duct seal comprising: a sealing member that can provide a seal between a duct and a substrate carried by the duct; and

a resilient member that can be operated after positioning of the seaing member in the duct to provide a resiliently biased engagement between the sealing member and the duct.

That article may also comprise:

a sealing member that can be deformed only when subjected to a certain treatment but is not deformed immediately solely by said treatment, said deformation being from a first configuration to a second configuration at which it is substantially unstressed and at which it engages the substrate; and

a mechanical member that can be deformed to correspond to said second configuration of the sealing member, thereby causing a resiliently biased engagement between the sealing member and the substrate.

The treatment preferably comprises heating. Thus, the sealing member can only be deformed when heated (which may for example soften the material from which it is made), but it will not immediately become deformed solely by heating. An alternative treatment is subjection to a solvent or other liquid, for example water, which may cause the material of the member to soften.

Whilst the above articles are in general highly successful, there are some instances where their installation may be inconvenient. We have now devised an article, particularly a duct seal, that may easily be installed around a supply line that is already in place and one that may be subjected to heating and sealing in situ.

Thus, the invention provides a device for expanding a sealing article (for example a sealing part of a duct seal), which comprises:

a resilient member that can be deformed against its resilience from a first configuration to a second configuration, the second configuration having a smaller cir cumference than the first;

means capable of causing the deformation in a continuous manner from the first to the second configuration; and

means allowing the member to relax from the second configuration, thereby increasing its circumference.

The invention also provides a device for expanding a sealing article, and that can be wrapped around an elongate substrate, which comprises:

a resilient wrap-around member that can be wrapped around the substrate and deformed against its resilience from a first configuration to a second configuration, the second configuration having a smaller circumference than the first;

means for securing the member in the wrapped configuration around the substrate; and

means capable, after the member has been thus secured, of causing the deformation from the first to the second configuration.

The inventon further provides a kit-of-parts suitable for sealing a supply line (particularly a cable such as a telecommunications cable, and especially a cable within a duct), which comprises:

(a) a device of the invention; and

(b) a sealing article, particularly one that softens but does not flow on heating to a temperature between 80 and 130°C, optionally one that is at least partly dimensionally recoverable (for example heat-shrinkable at one end), and preferably one that is at least partially coated with a sealing material such an a heat-activatable adhesive.

The invention still further provides a method of sealing a substrate, for example a supply line such as a telecommunications cable, to a duct (which term includes holes in bulkheads and holes in walls etc as well as discrete ducts) through which it passes, by means of a duct seal comprising a sealing article and a device comprising a wraparound resilient member for expanding the sealing article which method comprises:

(a) positioning the resilient member around the substrate;

(b) securing the member in a wrapped configuration and deforming it against its resilience from a first configuration to a second configuration, the second configuration having a smaller circumference than the first;

(c) positioning the sealing article around the member;

(d) moving the duct seal along the substrate to a position at which at least part of it lies within the duct; and

(e) then allowing the resilient member to relax thereby deforming the sealing article into engagement with the duct.

Reference to "circumference" does not imply a cross-section of any particular shape, although a substantially circular cross-section will in general be preferred.

For most applications, we prefer that the resilient member be positioned around the substrate, then secured and deformed, then positioned within the sealing article and the duct seal (ie the member and article) positioned within the duct. Then, where applicable, the sealing article may be heated to soften it or to activate any sealing material with which it is used, and the resilient member allowed to relax. The heating step and some action allowing the relaxation may be carried out in either order, or simaltaneously. The action allowing relaxation may be release of some ratchet or other locking mechanism, and may include breaking-off or otherwise separating a part of the resilient member that was deformed (for example by coiling) to cause deformation of the resilient member. If desired, this action may be carried out before the duct seal is placed in the duct, leaving heating to be carried out afterwards. This heating may then soften the sealing article sufficiently to allow the relaxation of the member to occur. A further posibility is to carry out heating with the duct seal outside the duct, and release of the resilient member after insertion.

The sealing article may have a first portion that sealingly engages a substrate such as a supply line, and a second portion that sealingly engages another substrate such as a duct or a different part of the same substrate. Thus, where the article comprises a duct seal, a second portion may engage the inside of the duct and a first portion may engage a supply line. The first and/or second portions may seal to the duct and/or supply line by any suitable means. For example each part may be recoverable, or provided with a mechanical fixing means (optionally the resilient member referred to above) or provided with an adhesive or sealant, or a combination of these sealing techniques may be used. It can be seen therefore that the mechanical member which causes the resilient bias may act to help maintain a seal to the duct and/or to the supply line; we prefer, however, that the mechanical member acts to maintain an expanded portion of the duct seal against the inside of the duct, and that another portion of the duct seal is heat-shrunk into engagement with the supply line. No difficulty will generally be found in applying heat to shrink that other portion of the duct seal around the supply line because that other portion (unlike the portion that engages the duct) may protrude from the duct.

The article of the invention may be used in other situations, for example it may provide encapsulation around a supply line, including joints in supply lines. Here the sealing article may be generally cylindrical, and the resilient member may act to stretch the sealing member axially such that it may later undergo radial shrinkage to engage the supply line. The invention will however be described primarily in terms of duct seals, where most benefit is envisaged.

In the case of the preferred duct seal mentioned above, the expansion caused by relaxation of the resilient member will comprise a radial expansion of a generally hollow portion of the duct seal. Thus, before expansion that portion will be easily insertable into the duct, and after expansion it will sealingly engage an internal surface of the duct. A sealing material such as a sealant (for example a mastic) or an adhesive (for example a hot-melt or other heat-activatable adhesive) may be provided between the duct and the surface of the duct seal that is to engage the duct. Such sealing material may conveniently be supplied coated or otherwise affixed to the relevant surface of the duct seal.

It is because it is desirable that this sealing material is not under significant peel or sheer forces in the installed product that the polymeric material should be substantially. unstressed after deformation.

By substantially unstressed we therefore mean that if any stresses remain, the nett force tending to displace the article from the substrate is not significant compared to the peel and/or sheer strength of any bond between the article and the substrate. Where no bond is provided, the force exerted by the mechanical member must significantly exceed any stresses in the article which would otherwise displace it from the substrate.

The resilient member is preferably one or more springs that cause or allow a radial expansion of the part of the sealing member that is to engage the duct or other substrate. The important point here is that after its initial deformation, the member may be made to change from a configuration corresponding to that of the sealing member before installation (for example a portion of a duct seal of smaller diameter) to a configuration corresponding to that of the installed sealing member (for example enlarged diameter). This change may be aided or brought about by heat, for example by heat causing release of some locking means of the resilient member; we prefer however that the device includes some mechanical means operated from outside the duct seal that allows the resilient member to relax. The article may be heated away from the duct or other place where it is to be installed without the configurational change occuring that would make it difficult or impossible to install, although we prefer heating to be carried out with the duct seal in place in the duct. This may be easier and may require less heat. The heating is desirable to soften any sealing material and to soften the article to allow easy deformation once in position.

The mechanical member may be an integral part of the article in the sense that it is part of the same structure as the polymeric material, or it may be mechanically affixed or bonded thereto, or it may be separate from the polymeric material and optionally provided as a tool which may be reuseable. Where both the device and the sealing member are of the wrap-around design, and they are to be installed around a cable already fixed in a duct, installation may be simpler if the two parts are initially separate.

Deformation of the member may be by hand, for example by means of a key which may be rotated and which protrudes to the outside of the article. Other mechanisms, however, may be employed particularly to allow relaxation, for example an electrical release or a mechanism triggered by heat. In this third case melting or softening of a fusible or sotenable material could allow a resiliently deformed member to relax.

The sealing article is preferably of a wrap-around design, such that it can be wrapped-around a substrate such as a supply line and secured in the wrapped around configuration. It may therefore have opposed longitudinal edge portions that may be brought and secured together. Some means may therefore be provided at the longitudinal edges. Such means may comprise an adhesive or some mechanical closure device. Since in the case of a duct seal, an outer surface of at least part of the article is to seal to the duct, that outer surface should correspond as closely as possible with the inside shape of the duct: in most cases it should be circular, and therefore any mechanical closure device should not be too bulky. One preferred mechanical closure device is a zipper, the two halves being sewn or otherwise fixed to respective longitudinal edge portions of the sealing article.

The sealing article may be provided with self-contained heating means, which may be integral with the article or may be fixed thereto. The heating means (or an external source of heat if preferred) may serve to soften the material of the article, to activate for example by softening a sealing material, may cause dimensional recovery, or may have two or more of these functions. Preferred heating means comprises an electrical heater which may be self-regulating. Examples of preferred heaters include those based on conductive polymer compositions, and self-regulation may be achieved by employing a material, such as a polymer loaded with a conductive filler, that exhibits positive temperature coefficient of resistance (PTC) behaviour. A self-contained heating means will be particularly useful if the duct seal is to be heated when in the duct. Heating when the duct seal is in the duct will be preferred where the seal is to be installed around a cable pre-positioned in a duct. It is in such a situation that a fully wrap-around duct seal is required; and the combination of self-contained heating and wrap-around ability is therefore a particularly useful and novel one.

The invention is further illustrated by the accompanying drawings, in which:

Figures 1a and 1b show a prior art duct seal;

Figure 2 shows installation of a duct seal according to the invention;

Figure 3 shows a duct seal of the invention; and

Figures 4-7 show a preferred device of the invention in greater detail.

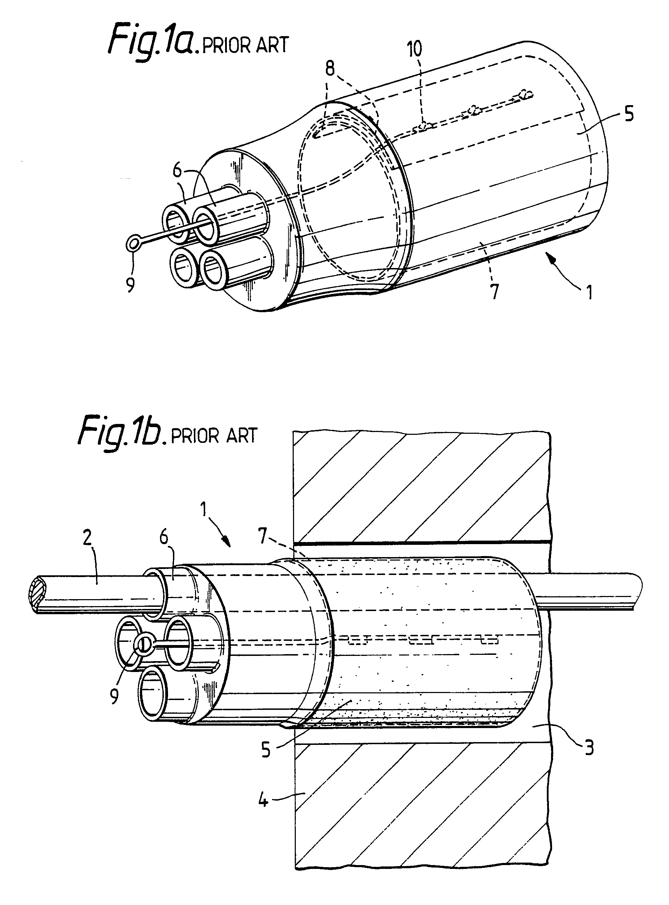

Figure 1a shows a prior at duct seal 1 and figure 1b shows that duct seal 1 in place providing a seal between a cable 2 and a duct 3, in for example a wall or bulkhead 4. The duct seal 1 has a first surface 5 that is to engage the duct 3 and a second surface 6 that is to engage the cable 2. In the embodiment illustrated there is provision to seal four cables within the duct. The second surface 6 may be heat shrinkable in order that a suitable seal be made to the cable 2. The duct seal shown in figures 1a and 1b has a mechanical member 7 in the form of a wrapped sheet of sprung metal or other material. The edges 8 of member 7 overlap and may be held in a deformed configuration such as a cylinder of smaller diameter. A release member 9 is provided to let member 7 spring back to its configuration of larger diameter, thereby expanding the surface 5 of the duct seal 1. For example slots may be provided in the member 7 through which protrude elements 10 which temporarily retain the overlapping edges 8. These elements are displaceable or deformable by pulling the release member 9.

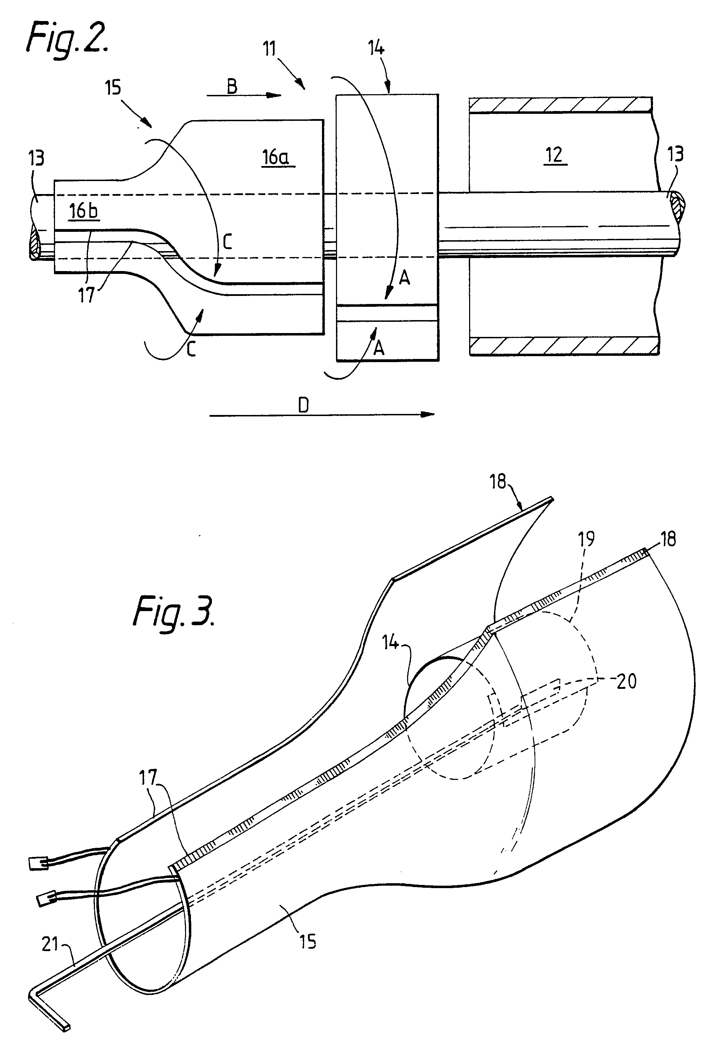

Figure 2 shows a duct seal 11 of the invention for sealing between a duct 12 (which may be a discrete article or a hole in a wall or bulkhead) and a supply line 13, such as a cable. The duct seal 11 comprises a device 14 and a sealing article 15, each of which may be of a wrap-around design as shown. The sealing article has a external first surface 16a that when installed will engage the duct 12 and an internal second surface 16b that will engage the cable 13. Surface 16a may have an external coating of a sealing material and/or surface 16b may have an internal coating of a sealing material. Surface 16b may be dimensionally recoverable, for example heat-shrinkable. The duct seal of the invention may (but need not) be used in situations, such as that illustrated, where a cable is already in place in a duct and no free end of it is accessible. A preferred sequence of installation steps is given by the letters A-D, The steps carried out are as follows:

A. The device 14 is wrapped around the cable 14 and deformed to its smaller circumference.

B. The sealing article 15 is wrapped around the cable 3.

C. The article 15 is positioned around the device 14 and the article is secured in its wrapped configuration by securing together edge portions 17,

D. The combined article 15 and device 14 are postioned in the duct 12, and the resilient member of the device 14 is allowed to relax to expand the surface 16a of the article 15 into engagement with the duct 12. That step may be aided by heating.

The order of these steps may be varied if desired. For example, the article could be wrapped directly around the device 14. It will be noted that the ability of the device 14 to be secured in a wrapped configuration and then to be deformed to a configuration of smaller circumference (preferably from a position outside the duct seal) may allow the edge portions 17 to be brought together easily. Clearly the expansion should not occur before the sealing article 15 is in the duct 12, and that can be assured by causing relaxation of the device 14 only after the sealing article is in the duct or, where the article requires heat-softening, by carrying out a heating step only after the article is in the duct.

Figure 3 shows a duct seal in more detail. As before, it comprises a device 14 and a sealing article 15. Edge portions 17 of the sealing member bear a zipper by means of which they can be held together. The device 14 comprises resilient member 19, and means 20 to deform the member by reducing its circumferential size. The means 20 may be operated from a distance by tool 21. The article 15 may be electrically heatable (for example to soften it, to activate a sealing material, or to cause dimensional recovery) and two electrical connectors are shown at the left-hand end of the drawing.

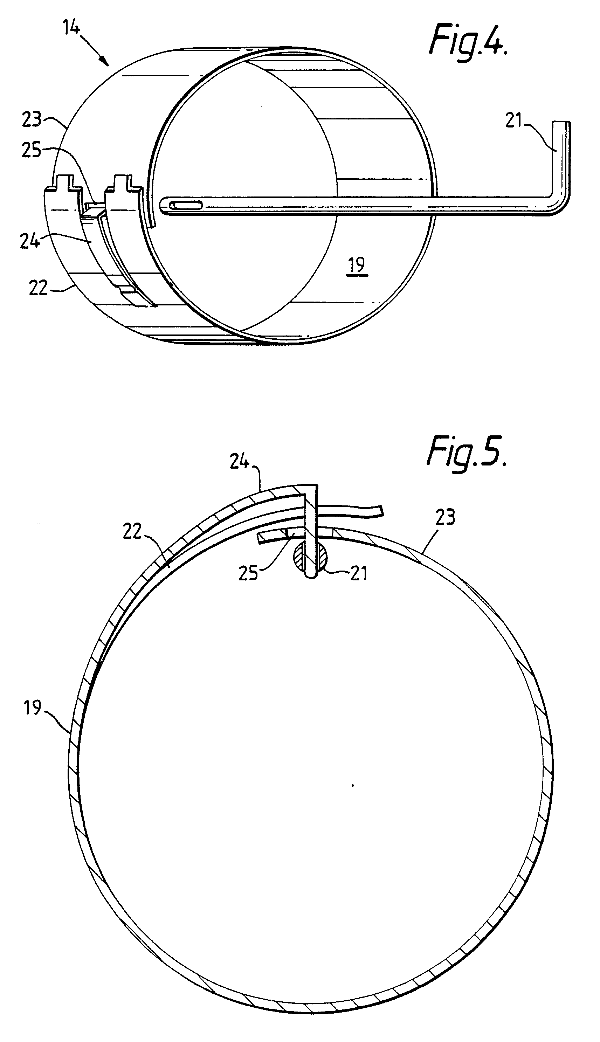

A preferred device 14 is illustrated in Figure 4. It comprises a resilient sheet having end portions 22 and 23. One of the end portions 22, has an extension 24 that is able to engage the other end portion 23. It may do this by passing through a hole 25 or other retaining means. The tool 21 may then engage a part of the extension 24 that protrudes through the hole 25. This is shown in cross-section in figure 5.

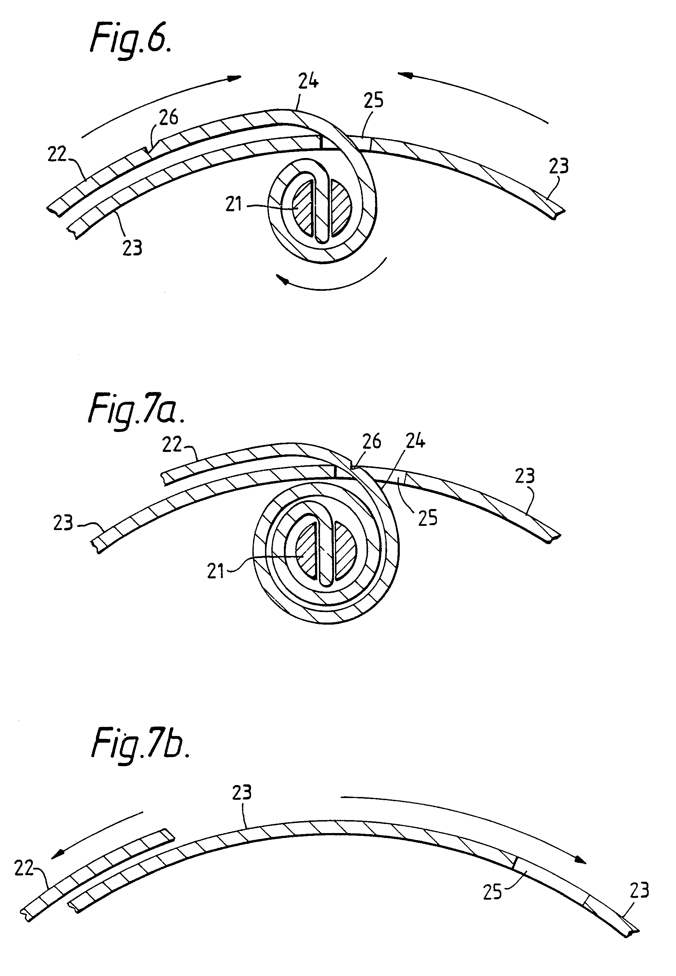

The effect of rotating the tool 21 is shown in figure 6. It can be seen that the extension is pulled through the hole, thereby drawing the edge portions 22 and 23 together, and reducing the circumferential size of the resilient member 19.

The extension 24 may be provided with a line of weakness 26 such that if the tool is rotated further the extension is separated from the edge portion 22, allowing the resilient member to spring back towards its initial configuration, thus expanding the overlying sealing article. This is shown in figures 7a and 7b.

An alternative, novel, duct seal or other sealing article may be provided which initially has a closed end and can thus be used to plug a duct or other hole. Later, when the duct is to be used the closed end is removed (or a hole is made in it) through which a cable or other substrate may be passed. Thus, the duct seal may serve at least temporarily to plug a duct. The duct seal preferably has means for expansion of a part thereof into engagement with the duct, and such means may comprise a spring, for example the device of the invention. The spring may employ a release tool which may protrude out of the duct, in which case the closed end preferably is that end which lies within the duct. An end that protrudes from the duct may be heat-shrinkable in order that it form a good seal to the cable. The duct seal may employ electrical heating. The duct seal with the closed end need not and generally will not, be of a wrap-around design.

For the avoidance of doubt it is here stated that the invention provides a sealing device for example a duct seal or plug embodying any of the features disclosed herein. For example any of the sealing articles, springs, release devices etc may be selected.

**Claims**

1. A device suitable for expanding a sealing article, which comprises:

a resilient member that can be deformed against its resilience from a first configuration to a second configuration, the second configuration having a smaller circumference than the first;

means capable of causing the deformation in a continuous manner from the first to the second configuration;

means allowing the member to relax from the second configuration, thereby increasing its circumference.

.2. A device for expanding a sealing article, and that can be wrapped around an elongate substrate, which comprises:

a resilient wrap-around member that can be wrapped around the substrate and deformed against its resilience from a first configuration to a second configuration, the second configuration having a smaller circumference than the first;

means for securing the member in the wrapped configuration around the substrate; and

means capable, after the member has been thus secured, of causing the deformation from the first to the second configuration.

3 A device according to claim 1, which the member is capable of being wrapped around a substrate, secured in the wrapped configuration and then deformed from the first configuration to the second configuration.

4. A device accordng to claim 1,2 or 3, in which the resilient member comprises sheet metal.

5. A device acording to claim 1, 2 or 3, in which the member has a first edge portion, and a second edge portion having an extension thereof that can engage the first edge portion, the extension being capable of being coiled thereby drawing together the first and second edge portions and causing the change from the first configuration to second configuration.

6. A device according to claim 5, in which the extension has a line of weakness such that continued coiling after the second configuration has been reached results in separation of the extension from the second edge portion, allowing the member to relax from the second configuration, thereby increasing its circumference.

7. A kit-of-parts suitable for environmentally sealing a supply line, which comprises:

(a) a device according to any preceding claim; and

(b) a sealing article.

8. A kit according to claim 7, in which the sealing article softens but does not flow on heating to a temperature between 80 and 130°C.

9. A kit according to claim 7, in which the sealing article is cross-linked.

10. A kit according to any of claims 7-9, in which a surface of the sealing article is coated with a heat-activatable adhesive.

11. A kit according to any of claim 7-10, in which the sealing article is a duct seal having a first surface capable when expanded by the device of engaging an internal surface of a duct, and a second surface capable of engaging an external surface of a supply line within the duct.

12. A kit according to claim 11, in which said second surface is heat-shrinkable.

13. A kit according to any of claim 7-12, in which the sealing article is a wrap-around article having edge portions that can be secured together to maintain the article in a wrapped configuration.

14. A kit according to any of claims 7-13, in which the sealing article has self-contained heating means.

15. A kit according to claim 14, in which the heating means comprises a self-regulating electrical heater comprising a conductive polymer material.

16. A method of sealing a substrate to a duct through which it passes by means of a duct seal comprising a sealing article and a device comprising wrap-around resilient member for expanding the sealing article, which method comprises

(a) positioning the resilient member around the substrate;

(b) securing the member in a wrapped configuration and deforming it against its resilience from a first configuration to a second configuration, the second configuration having a smaller circumerence than the first;

(c) positioning the sealing article around the member;

(d) moving the duct seal along the substrate to a position at which at least part of it lies within the duct; and

(e) then allowing the resilient member to relax thereby deforming the sealing article into engagements with the duct.

17. A method according to claim 16, which additionally comprises heating the sealing article thereby softening it.

18. A method according to claim 16 or 17, in which said part of the sealing article is heated, said part being heated when the duct seal is in the duct.

19. A method according to any of claims 16,18, in which the member has a first edge portion, and a second edge portion having an extension thereof that can engage the first portion, the method including coiling the extension thereby drawing together the first and second edge portions and causing the change from the first configuration to the second configuration.

20. A method according to claim 19, in which the extension has a line of weakness such that continued coiling after the second configuration has been reached results in separation of the extension from the second edge portion, the method including such continued coiling thereby allowing the resilient member to relax thereby deforming the sealing article into engagement with the duct.

21. A wrap-around duct seal, which comprises:

(a) a wrap-around sealing article;

(b) a wrap-around device that can expand a part of the sealing article into engagement with an internal surface of the duct; and

(c) heating means integral with or fixed to the duct seal.

22. A duct seal capable of at least temporarily plugging a duct, which comprises

(a) a sealing member having a closed end portion which can be inserted into a duct; and

(b) a spring that can expand that end portion into engagement with an internal surface of the duct.

*Fig.1a.* PRIOR ART

*Fig.1b.* PRIOR ART

Fig.2.

Fig.3.

*Fig.4.*

*Fig.5.*

*Fig.6.*

*Fig.7a.*

*Fig.7b.*